# EUROPÄISCHE PATENTSCHRIFT

(11) **EP 3 587 800 B1**
(45) Veröffentlichungstag und Bekanntmachung des Hinweises auf die Patenterteilung: **08.11.2023**
(21) Anmeldenummer: 18180149.9
(22) Anmeldetag: 27.06.2018
(51) Int. Cl.: F03D 1/06

(54) **STÜTZSYSTEM FÜR EINEN SPINNER EINER ROTORNABE FÜR EINE WINDENERGIEANLAGE**
SUPPORT SYSTEM FOR A SPINNER OF A ROTOR HUB FOR A WIND TURBINE
SYSTÈME DE SUPPORT POUR UN FILAGE D'UN MOYEU DE ROTOR POUR UNE ÉOLIENNE

(43) Veröffentlichungstag der Anmeldung: 01.01.2020
(73) Patentinhaber: Nordex Energy SE & Co. KG, 22419 Hamburg (DE)
(72) Erfinder: Schaale, Thomas, 18055 Rostock (DE); Baum, Sebastian, 18057 Rostock (DE)
(74) Vertreter: Grünbaum, Annekathrin

(56) Entgegenhaltungen:
- US-A1- 2013 302 175
- US-A1- 2015 354 233

## Beschreibung

Die vorliegende Erfindung betrifft ein Stützsystem für einen Spinner einer Rotornabe für eine Windenergieanlage, insbesondere die Anbindung eines Spinners an die Rotornabe.

Eine Windenergieanlage besteht üblicherweise aus einem Turm und einer um die Längsachse des Turms drehbar auf dem Turmkopf gelagerten Gondel. Die Gondel trägt den Rotor mit einer Rotornabe und mindestens einem Rotorblatt sowie einen Generator, der die von dem Rotor aus dem Wind entnommene Energie in elektrische Energie umwandelt.

Bei einem sogenannten Spinner handelt es sich um eine Rotornabenverkleidung. Für die an der Rotornabe vorgesehenen Rotorblätter besitzt der Spinner je Rotorblatt eine Rotorblattöffnung, wobei die Rotorblattöffnungen gleichmäßig verteilt am Umfang des Spinners angeordnet sind. Durch die Rotorblattöffnungen ist jeweils ein Rotorblattanschluss in der Rotornabe zugänglich. Ferner besitzt der Spinner eine zentrale Wellenöffnung, in der die Verbindung der Rotornabe zum Triebstrang erfolgt. Die Wellenöffnung zeigt dabei zu dem Maschinenhaus der Windenergieanlage.

Für Windenergieanlagen und deren Einsatzbedingungen ist die Stabilität des Spinners von besonderer Bedeutung. Das Stützsystem des Spinners ist häufig aus einzelnen Stab-Elementen (U-Profil; L-Profile; Rohre etc.) ausgeführt. Ebenso ist der Spinner häufig aus drei bis vier Teilen zusammengesetzt, welche untereinander und mit dem Stützsystem verbunden werden.

DE 102014200386 A1 offenbart eine Nabe und deren Verkleidung einer Windkraftturbine. Die Verkleidung ist mit der Nabe verbunden und umfasst drei Verkleidungsplatten, welche jeweils drei Verbindungsteile aufweisen. Ein Verbindungsteil befestigt die Nabe zwischen zwei Blattlager-Verbindungsflanschen, die zwei anderen Verbindungsteile sind jeweils mit den zwei anderen Verkleidungsplatten verbunden. Drei gebogene Halterungen sind mit ihren jeweiligen zwei Endteilen mit der Nabe und mit ihrem Mittelteil mit jeweils zwei benachbarten Verkleidungsplatten verbunden.

US 2012/0134840 A1 zeigt eine Rotornabenanordnung mit einem Nabengehäuse mit einer Vielzahl von Gehäusesegmenten, wobei die innere Nabe sich aus einer Mehrzahl von Nabensegmenten zusammensetzt. Zusätzlich sind eine Mehrzahl von balkenartigen Stützelementen zwischen der Innennabe und dem Nabengehäuse angeordnet. Die Stützelemente sind über angeschweißte Befestigungsrippen mit den Gehäusesegmenten verbunden und werden an den Nabensegmenten mittels geeigneter Befestigungselemente (beispielsweise Bolzen, Schrauben, Bolzen, Nieten und/oder dergleichen) angekoppelt. Die Stützelemente können aus einem geeigneten Metall und/oder einem anderen geeigneten starren und/oder halbsteifen Material gebildet sein.

In den Veröffentlichungen_US 2013/0302175 A1 und US 2015/0354233 A1 sind Plattformen für Wartungspersonal in einem Rotor einer Windkraftanlage offenbart. Die Plattformen sind mit einem Befestigungssystem an der Nabe des Rotors und/oder an einer Innenfläche des Rotorgehäuses befestigt.

### Darstellung der Erfindung

Der Erfindung liegt die Aufgabe zugrunde, den Spinner für eine Windenergieanlage mit einem geeigneten Stützsystem zu versehen. Das Stützsystem soll in sich schubsteif sein und dadurch die Beanspruchung des Spinners reduzieren.

Die Lösung der Aufgabe erfolgt mit den Merkmalen des Anspruchs 1, wobei die Unteransprüche weitere Ausgestaltungen beschreiben.

Die erfindungsgemäße Lösung betrifft die Anbindung eines Spinners an eine Rotornabe und ein Stützsystem für den Spinner. Eine Rotornabe einer Windenergieanlage umfasst einen Spinner, wobei die Rotornabe mit dem Spinner mechanisch in Verbindung steht. Der Spinner besteht aus wenigstens drei Spinnerbauteilen. Erfindungsgemäß ist ein Stützsystem vorgesehen, durch welches jeweils zwei nicht direkt benachbarte Spinnerbauteile von der Rotornabe abgestützt werden. Ein jeweils drittes Spinnerbauteil ist zwischen den beiden Spinnerbauteilen angeordnet und mit diesen verbunden.

Das Stützsystem besteht aus luvseitigen, vorderen Stützelementen an einer vordere Seite der Rotornabe und leeseitigen, zwischen der Rotornabe und dem Spinner angeordneten hinteren Stützstreben. Die hinteren Stützstreben sind an einer, zum Maschinenhaus gerichteten Seite der Rotornabe, welche eine zentrale Wellenöffnung aufweist, und die vorderen Stützelemente sind an der der zentralen Wellenöffnung gegenüber liegenden Seite der Rotornabe angeordnet.

Das vordere Stützelement besteht aus einem Stabelement und einem Blechteil. Es können ein oder mehrere vordere Stützelemente angeordnet sein. Das Blechteil ist ein Stützblech mit einer Form eines gleichschenkligen Trapezes, wobei zwei Seitenwände des Blechteils um 90° abgewinkelt sind. Die Seitenwände sind länger als die Seiten des Trapezes, so dass sie über eine obere Wand des Stützblechs hinausragen. Eine untere Wand ist der oberen Wand des Stützblechs gegenüber angeordnet und zum Stützblech abgewinkelt. Der Winkel zwischen Stützblech und der unteren Wand beträgt in einer Ausführungsform 139°.

In einer weiteren Ausgestaltung weisen die vorderen Stützelemente an ihren verlängerten Seitenwänden Öffnungen auf, in welchen ein rohr- oder stabförmiges Stabelement angeordnet ist. Das Stabelement ist über Befestigungswinkel mit den Spinnerbauteilen verbunden. Die vorderen Stützelemente sind mit der unteren Wand an der Rotornabe befestigt.

In einer weiteren Ausgestaltung verbindet jeweils ein Verbindungselement jeweils zwei vordere Stützelemente lösbar miteinander, indem jeweils ein Stabelement des einen vorderen Stützelements mit dem ersten Ende des Verbindungselements und das Stabelement des zweiten vorderen Stützelements mit dem zweiten Ende des Verbindungselements verbunden sind. Die Befestigungswinkel der Stabelemente der vorderen Stützelemente sind mit Befestigungswinkeln, welche an den Enden der Verbindungselemente angeordnet sind, und mit den Spinnerbauteilen verbunden.

In einer weiteren Ausgestaltung besteht die hintere Stützstrebe aus einem länglichen, an einer kurzen Seite um 90° abgewinkelten Blech. Auf dem Blech ist wenigstens ein längsseitiger Steg mittig angeordnet. Die kurze, abgewinkelte Seite ist mit der Rotornabe und das der abgewinkelten Seite gegenüberliegende Ende der hinteren Stützstrebe ist mit den Spinnerbauteilen verbunden.

Die Anbindung des Stützsystems an die Spinnerbauteile kann an den Flanschen der Spinnerbauteile erfolgen. Es müssen keine großen Biegemomente übertragen werden. Die Herstellung der Spinnerbauteile wird wesentlich vereinfacht, da keine ebenen Abspiegelungen oder Gewindebuchsen positioniert werden müssen.

Die Teilung der Spinnerbauteile führt dazu, dass die Abmessungen der Spinnerbauteile so ausgeführt werden können, dass Transportbreiten kleiner 3 m realisiert werden können bzw. die Stapelbarkeit deutlich erhöht werden kann.

### Ausführung der Erfindung

Die Erfindung wird anhand eines Ausführungsbeispiels erläutert. Hierzu zeigen
- Figur 1: eine schematische Darstellung einer Rotornabe mit einem Spinner und einem erfindungsgemäßen Stützsystem
- Figur 2: eine schematische Darstellung einer Rotornabe mit mehreren vorderen Stützelementen (nur ein Stützelement sichtbar) und mehreren hinteren Stützstreben,
- Figur 3: ein vorderes Stützelement,
- Figur 4: ein Stützblech des vorderen Stützelements,
- Figur 5: ein vorderes Stützelement mit Spinner,
- Figur 6: ein Verbindungselement zwischen den vorderen Stützelementen,
- Figur 7: eine hintere Stützstrebe und
- Figur 8: zwei hintere Stützstreben und den Spinner.

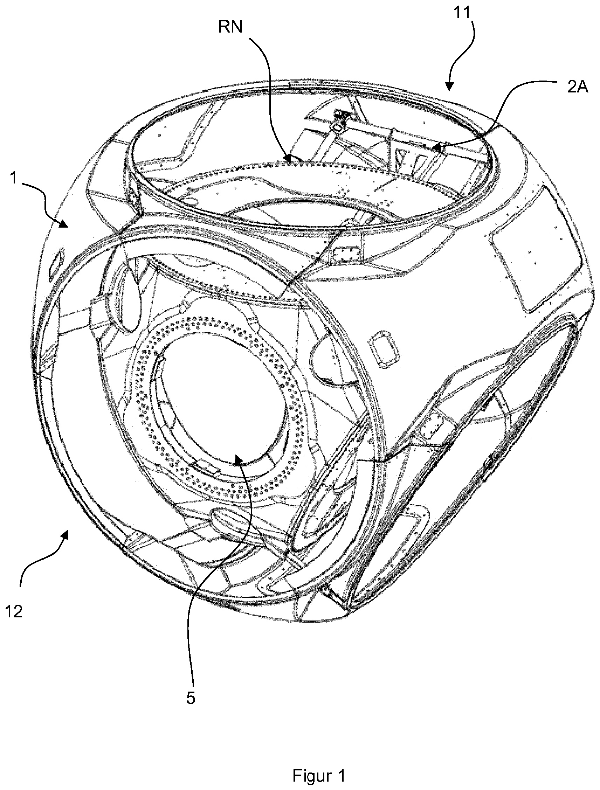

In Figur 1 ist eine schematische Darstellung einer Rotornabe RN einer Windenergieanlage mit einem Spinner 1 und einem erfindungsgemäßen Stützsystem 2 zu sehen. Die in Figur 1 gezeigte Seite ist an der Rotornabe RN die hintere Seite 12, welche zum Maschinenhaus weist und leeseitig eine zentrale Wellenöffnung 5 zeigt. Die Seite der Rotornabe RN und des Spinners 1, welche als vordere Seite 11, auch luvseitig, bezeichnet wird, befindet sich der zentralen Wellenöffnung 5 gegenüberliegend. Das Stützsystem besteht aus drei gleichen vorderen Stützelementen 2A und drei Verbindungselementen 4 an der vorderen Seite 11 des Spinners 1 und sechs hinteren Stützstreben 2B an der hinteren Seite 12 des Spinners 1. Der Spinner 1 ist in diesem Ausführungsbeispiel in mehr als drei Spinnerbauteile 13 geteilt, vorteilhafter Weise in sechs bis neun Spinnerbauteile 13. Es können aber auch mehr als neun Spinnerbauteile 13 angeordnet sein. Das Stützsystem 2 ist in sich schubsteif und reduziert dadurch die Beanspruchung des Spinners 1.

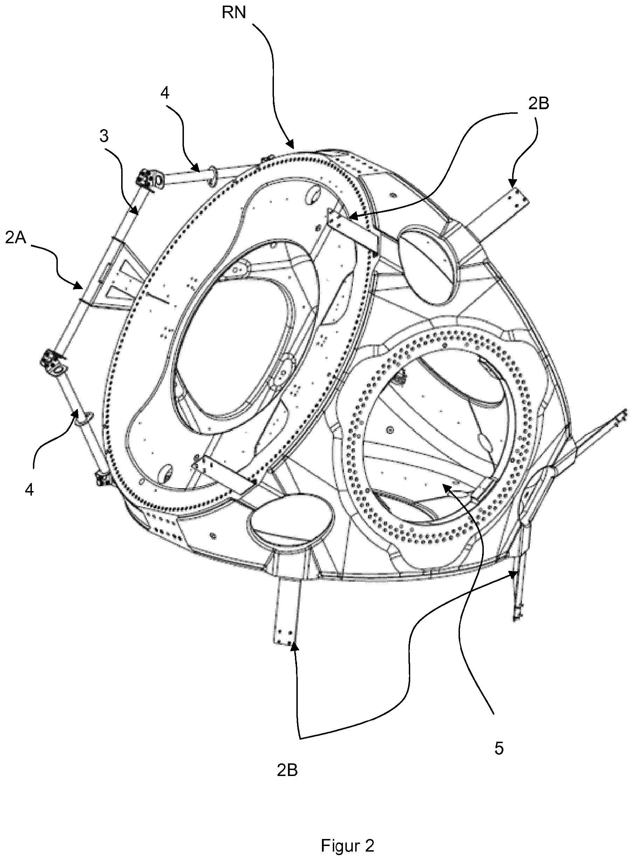

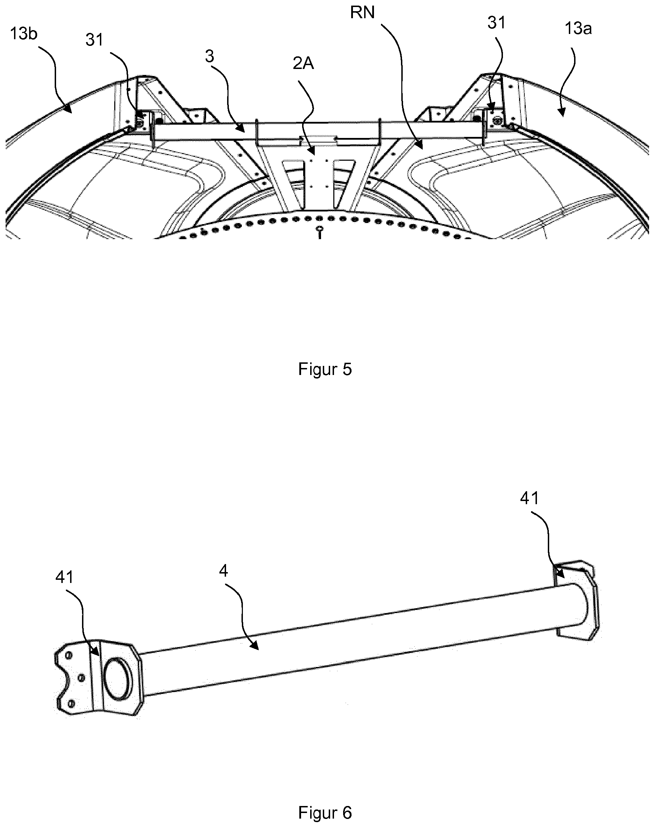

Die Figur 2 zeigt eine schematische Darstellung der Rotornabe RN mit der Anordnung eines vorderen Stützelements 2A und mehreren hinteren Stützstreben 2B ohne Spinner. In der Regel sind drei vordere Stützelemente 2A mit der Rotornabe RN verbunden. Diese drei vorderen Stützelemente 2A sind miteinander lösbar über rohr- oder stabförmige Verbindungselemente 4 verbunden. Ein solches Verbindungselement 4 wird in Figur 6 näher gezeigt.

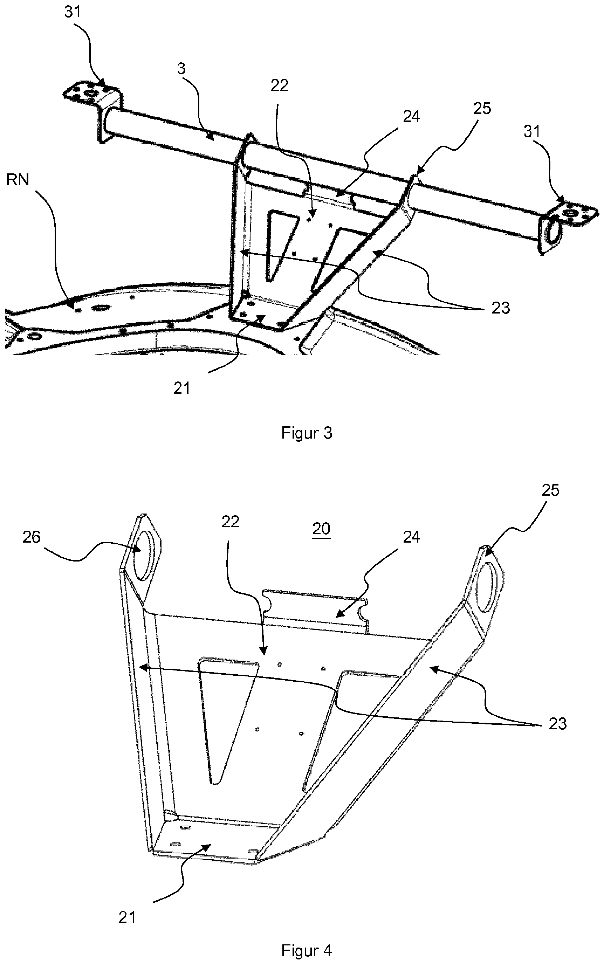

Figur 3 zeigt ein vorderes Stützelement 2A, welches mit der Rotornabe RN verbunden ist. Die Anbindung des Stützsystems 2 an die Rotornabe RN erfolgt, beispielsweise durch Verschraubung, an extra dafür vorgesehenen Angüssen oder an Schnittstellen zur Rotorwelle/Blattlager. Das vordere Stützelement 2A besteht aus einem an drei Seiten abgekanteten Stützblech 20 und einem Stabelement 3. Das Stützblech 20 hat grundsätzlich die Form eines gleichschenkligen Trapezes mit einem Boden 22, zwei Seitenwänden 23, einer unteren Wand 21 und einer oberen Wand 24. Die untere Wand 21 ist an der Rotornabe RN befestigt. Die beiden Seitenwände 23 des Stützblechs 20 sind in eine Richtung um 90° gegenüber dem Boden 22 abgekantet, so dass das vordere Stützelement 2A in sich ausreichend stabil ist. Die Seitenwände 23 ragen über die obere Wand 24 hinaus und gehen jeweils in eine laschenförmige Aufnahme 25 für das Stabelement 3 über. Die laschenförmigen Aufnahmen 25 sind ihrerseits derart abgekantet, dass sie parallel zueinander stehen und das Stabelement 3 in dafür vorgesehenen Öffnungen 26 aufnehmen können. Das Stabelement 3 ist zusätzlich mit der oberen Wand 24 fest verbunden. Der Winkel zwischen der unteren Wand 21 und dem Boden 22 des vorderen Stützelements 2A beträgt wenigstens 90°. Das Stabelement 3 ist an seinen Enden mit Befestigungswinkeln 31 versehen, an welchen die Spinnerbauteile 13 befestigt werden.

Figur 4 zeigt noch einmal das Stützblech 20 des vorderen Stützelements 2A mit dem Boden 22, den zwei Seitenwänden 23, der unteren Wand 21 und der oberen Wand 24 ohne das Stabelement 3.

Figur 5 zeigt das vordere Stützelement 2A und den Spinner 1. Der Spinner 1 ist in Segmente aufgeteilt, welche die Spinnerbauteile 13 ergeben. Figur 3 zeigt weiter, dass zwei Spinnerbauteile 13 angeordnet sind, wobei ein rechtes Spinnerbauteil 13a mit dem rechten Befestigungswinkel 31 des vorderen Stützelements 2A und ein linkes Spinnerbauteil 13b mit dem linken Befestigungswinkel 31 des vorderen Stützelements 2A verbunden ist. Zwischen dem rechten Spinnerbauteil 13a und dem linken Spinnerbauteil 13b wird ein weiteres Spinnerbauteil 13 eingesetzt. Dieses Spinnerbauteil 13 wird mit den beiden anderen Spinnerbauteilen 13a und 13b verbunden. Die Verbindung kann beispielsweise eine Verschraubung oder eine Klemmverbindung sein. Die Anbindung des vorderen Stützelements 2A an die Spinnerbauteile 13 erfolgt z.B. mit Hilfe von einlaminierten Gewindebuchsen oder durch das Einklemmen der Spinnerbauteile 13 mit einer separaten, hier nicht gezeigten Metallplatte. Hierfür müssen die Gewindebuchsen in der Herstellung der Bauteile positioniert werden bzw. müssen ebene Flächen für das Klemmen vorgesehen werden. Die Lasten werden durch das Stützsystem 2 aufgenommen.

Figur 6 zeigt ein Verbindungselement 4. Das Verbindungselement 4 besteht aus einem Rohr oder Stab. An den beiden Enden ist das Rohr oder der Stab mit je einem Befestigungswinkel 41 verbunden. Die Befestigungswinkeln 41 dienen der Befestigung an den Spinnerbauteile 13. Außerdem ist jeweils ein Befestigungswinkel 41 des Verbindungselements 4 mit jeweils einem Befestigungswinkel 31 des Stabelements 3 eines vorderen Stützelements 2A lösbar verbunden, so dass jeweils zwei vordere Stützelemente 2A miteinander über ein Verbindungselement 4 verbunden sind.

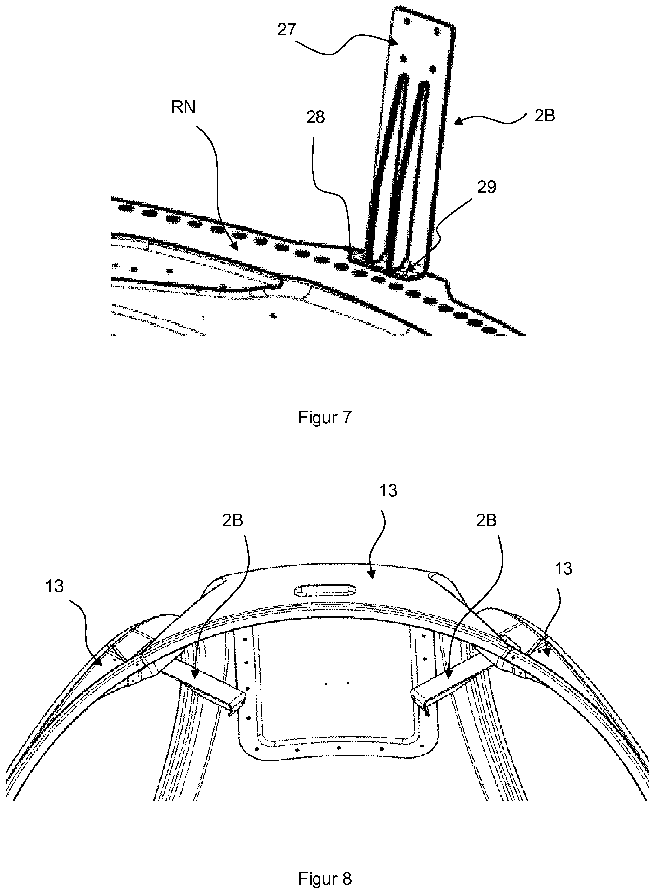

In Figur 7 wird eine hintere Stützstrebe 2B gezeigt. Die hintere Stützstrebe 2B besteht, anders als das vordere Stützelement 2A, lediglich aus einem länglichen, an einer der beiden kurzen Seiten 28 um 90° abgewinkelten Blech mit wenigstens einem längsseitigen, mittigen Steg 27 zur Stabilisierung. In Figur 7 sind zwei mittige, parallele Stege 27 gezeigt. Die kurze, abgewinkelte Seite 28 weist Bohrungen 29 auf, durch welche die hintere Stützstrebe 2B mit der Rotornabe RN verschraubt wird. Das gegenüberliegende Ende der hinteren Stützstrebe 2B wird mit den Spinnerbauteilen 13 verbunden.

Figur 8 zeigt zwei hintere Stützstreben 2B und den Spinner 1. Die hinteren Stützstreben 2B sind voneinander weg geneigt mit einem Winkel größer 90° befestigt. Figur 8 zeigt weiter, dass hier drei Spinnerbauteile 13 angeordnet sind, wobei ein rechtes Spinnerbauteil 13a mit der rechten hinteren Stützstrebe 2B und ein linkes Spinnerbauteil 13b mit der linken hinteren Stützstrebe 2B verbunden ist. Zwischen dem rechten Spinnerbauteil 13a und dem linken Spinnerbauteil 13b ist ein weiteres Spinnerbauteil 13c eingesetzt, wobei die Verbindung durch Verschraubung oder durch eine Klemmverbindung mit dem rechten Spinnerbauteil 13a und dem linken Spinnerbauteil 13b erfolgt.

Da es sich bei dem vorhergehend, detailliert beschriebenen Stützsystem 2 um Ausführungsbeispiele handelt, können diese in üblicher Weise vom Fachmann in einem weiten Umfang modifiziert werden, ohne den Bereich der Erfindung zu verlassen. Insbesondere können auch die konkreten Ausgestaltungen des Stützsystems 2 in anderer Form als in der hier beschriebenen folgen. Ebenso kann das Stützsystem 2 in einer anderen Form ausgestaltet werden, wenn dies aus Platzgründen bzw. designerischen Gründen notwendig ist. Weiter schließt die Verwendung der unbestimmten Artikel "ein" bzw. "eine" nicht aus, dass die betreffenden Merkmale auch mehrfach vorhanden sein können.

### Bezugszeichen

- RN: Rotornabe
- 1: Spinner
- 11: vordere Seite (luvseitig) der Rotornabe RN und des Spinners 1
- 12: hintere Seite (leeseitig) der Rotornabe RN und des Spinners 1
- 13: Spinnerbauteil
- 13a: rechtes Spinnerbauteil
- 13b: linkes Spinnerbauteil
- 2: Stützsystem
- 2A: vorderes Stützelement
- 20: Stützblech
- 21: untere Wand
- 22: Boden
- 23: Seitenwände
- 24: obere Wand
- 25: laschenförmige Aufnahme
- 26: Öffnungen
- 2B: hintere Stützstrebe
- 27: Steg der hinteren Stützstrebe 2B
- 28: kurze, abgewinkelte Seite der hinteren Stützstrebe 2B
- 29: Bohrungen
- 3: Stabelement
- 31: Befestigungswinkel am Stabelement 3
- 4: Verbindungselement
- 41: Befestigungswinkel am Verbindungselement 4
- 5: zentrale Wellenöffnung

## Patentansprüche

1. Stützsystem (2) für einen Spinner (1) einer Rotornabe (RN) für eine Windenergieanlage, umfassend den Spinner (1), wobei die Rotornabe (RN) mit dem Spinner (1) in mechanischer Verbindung steht, wobei der Spinner (1) aus wenigstens drei Spinnerbauteilen (13) besteht, wobei das Stützsystem (2) jeweils zwei nicht direkt benachbarte Spinnerbauteile (13a, 13b) von der Rotornabe abstützt und ein jeweils drittes Spinnerbauteil (13) zwischen beiden Spinnerbauteilen (13a, 13b) angeordnet und mit diesen verbunden ist, wobei luvseitig vordere Stützelemente (2A) an einer vorderen Seite (11) zwischen der Rotornabe (RN) und dem Spinner (1) und leeseitig hintere Stützstreben (2B) an einer, zum Maschinenhaus gerichteten Seite der Rotornabe (RN), welche eine zentrale Wellenöffnung (5) aufweist, zwischen der Rotornabe (RN) und dem Spinner (1) angeordnet sind und wobei das vordere Stützelement (2A) aus einem Stabelement (3) und einem Blechteil besteht, welches ein Stützblech (20) mit einer Form eines gleichschenkligen Trapezes ist,
wobei zwei Seitenwände (23) des Blechteils um 90° abgewinkelt sind und die Seitenwände (23) länger als die Seiten des Trapezes sind, so dass sie über eine obere Wand (24) des Stützblechs (20) hinausragen,
und dass eine untere Wand (21), welche der oberen Wand (24) des Stützblechs (20) gegenüber angeordnet ist, vom Stützblech (20) abgewinkelt ist.

2. Stützsystem (2) nach Anspruch 1 **dadurch gekennzeichnet, dass** der Winkel zwischen dem Stützblech (20) und der unteren Wand (21) zwischen 110° und 150° beträgt.

3. Stützsystem (2) nach Anspruch 1 oder 2
**dadurch gekennzeichnet, dass**
das vordere Stützelement (2A) an seinen verlängerten Seitenwänden (23) Öffnungen (26) aufweist, in welchen ein Stabelement (3) angeordnet ist, wobei das Stabelement (3) über Befestigungswinkel (31) mit den Spinnerbauteilen (13) verbunden ist.

4. Stützsystem (2) nach Anspruch 1 oder 2
**dadurch gekennzeichnet, dass**
das vordere Stützelement (2A) mit der unteren Wand (21) an der Rotornabe (RN) befestigt ist.

5. Stützsystem (2) nach einem der vorhergehenden Ansprüche **dadurch gekennzeichnet, dass**
ein Verbindungselement (4) jeweils zwei vordere Stützelemente (2A) lösbar miteinander verbindet, indem jeweils ein Stabelement (3) des einen vorderen Stützelements (2A) mit einem ersten Ende des Verbindungselements (4) und das Stabelement (3) des zweiten vorderen Stützelements (2A) mit einem zweiten Ende des Verbindungselements (4) verbunden sind.

6. Stützsystem (2) nach Anspruch 5 **dadurch gekennzeichnet, dass** die Befestigungswinkel (31) der Stabelemente (3) der vorderen Stützelemente (2A) mit Befestigungswinkeln (41), welche an den Enden der Verbindungselemente (4) angeordnet sind, und mit den Spinnerbauteilen (13) verbunden sind.

7. Stützsystem (2) nach Anspruch 1 **dadurch gekennzeichnet, dass** die hintere Stützstrebe (2B) aus einem länglichen, an einer kurzen Seite (28) um 90° abgewinkelten Blech besteht, und wenigstens ein längsseitiger Steg (27) mittig auf dem Blech angeordnet ist, und die kurze, abgewinkelte Seite (28) mit der Rotornabe (RN) und das der abgewinkelten Seite (28) gegenüberliegende Ende der hinteren Stützstrebe (2B) mit den Spinnerbauteilen (13) verbunden ist.

## Claims

1. Support system (2) for a spinner (1) of a rotor hub (RN) for a wind turbine comprising the spinner (1), wherein the rotor hub (RN) is mechanically connected to the spinner (1), wherein the spinner (1) consists of at least three spinner components (13), wherein the support system (2) supports in each case two spinner components (13a, 13b) of the rotor hub that are not directly adjacent, and a respective third spinner component (13) is disposed between the two spinner components (13a, 13b) and connected to the latter, wherein, on the windward side, front support elements (2A) are disposed on a front side (11), between the rotor hub (RN) and the spinner (1), and, on the leeward side, rear support struts (2B) are disposed on a side of the rotor hub (RN) that faces the nacelle and has a central shaft opening (5), between the rotor hub (RN) and the spinner (1), and wherein the front support element (2A) consists of a rod element (3) and a sheet-metal part which is a support plate (20) with the shape of an isosceles trapezium,
wherein two side walls (23) of the sheet-metal part are angled by 90°, and the side walls (23) are longer than the sides of the trapezium, so that said side walls project beyond an upper wall (24) of the support plate (20);
and a lower wall (21), which is disposed opposite the upper wall (24) of the support plate (20), is angled away from the support plate (20).

2. Support system (2) according to Claim 1, **characterized in that** the angle between the support plate (20) and the lower wall (21) is between 110° and 150°.

3. Support system (2) according to Claim 1 or 2, **characterized in that** the front support element (2A) on the extended side walls (23) thereof has openings (26) in which a rod element (3) is disposed, wherein the rod element (3) is connected to the spinner components (13) by way of fastening brackets (31).

4. Support system (2) according to Claim 1 or 2, **characterized in that** the front support element (2A) is fastened to the rotor hub (RN) by way of the lower wall (21).

5. Support system (2) according to one of the preceding claims, **characterized in that** a connecting element (4) connects in each case two front support elements (2A) releasably to one another **in that** in each case a rod element (3) of the one front support element (2A) is connected to a first end of the connecting element (4), and the rod element (3) of the second front support element (2A) is connected to a second end of the connecting element (4).

6. Support system (2) according to Claim 5, **characterized in that** the fastening brackets (31) of the rod elements (3) of the front support elements (2A) are connected to fastening brackets (41), which are disposed on the ends of the connecting elements (4), and to the spinner components (13).

7. Support system (2) according to Claim 1, **characterized in that** the rear support strut (2B) consists of an elongate plate, which on a short side (28) is angled by 90°, and at least one web (27), situated on the longitudinal side, is disposed centrally on the plate, and the short, angled side (28) is connected to the rotor hub (RN), and that end of the rear support strut (2B) that lies opposite the angled side (28) is connected to the spinner components (13).

## Revendications

1. Système de support (2) pour un nez de rotor (1) d'un moyeu de rotor (RN) pour une éolienne, comprenant le nez de rotor (1), le moyeu de rotor (RN) étant en liaison mécanique avec le nez de rotor (1), le nez de rotor (1) étant constitué d'au moins trois composants de nez de rotor (13), le système de support (2) supportant respectivement deux composants de nez de rotor (13a, 13b) non directement voisins par le moyeu du rotor et un troisième composant de nez de rotor (13) respectif étant agencé entre les deux composants de nez de rotor (13a, 13b) et étant relié à ceux-ci, des éléments de support avant (2A) étant agencés au vent sur un côté avant (11) entre le moyeu du rotor (RN) et le nez de rotor (1) et des entretoises de support arrière (2B) étant agencées sous le vent sur un côté du moyeu de rotor (RN) orienté vers la nacelle, qui présente une ouverture d'arbre centrale (5), entre le moyeu de rotor (RN) et le nez de rotor (1), et l'élément de support avant (2A) étant constitué d'un élément de barre (3) et d'une pièce de tôle qui est une tôle de support (20) ayant une forme de trapèze isocèle,
deux parois latérales (23) de la pièce de tôle étant coudées à 90° et les parois latérales (23) étant plus longues que les côtés du trapèze, de telle sorte qu'elles dépassent d'une paroi supérieure (24) de la tôle de support (20),
et une paroi inférieure (21), qui est agencée en face de la paroi supérieure (24) de la tôle de support (20), étant coudée par rapport à la tôle de support (20).

2. Système de support (2) selon la revendication 1, **caractérisé en ce que** l'angle entre la tôle de support (20) et la paroi inférieure (21) est compris entre 110° et 150°.

3. Système de support (2) selon la revendication 1 ou 2, **caractérisé en ce que** l'élément de support avant (2A) présente, sur ses parois latérales prolongées (23), des ouvertures (26) dans lesquelles est agencé un élément de barre (3), l'élément de barre (3) étant relié aux composants de nez de rotor (13) par l'intermédiaire d'équerres de fixation (31).

4. Système de support (2) selon la revendication 1 ou 2, **caractérisé en ce que** l'élément de support avant (2A) est fixé au moyeu du rotor (RN) par la paroi inférieure (21) .

5. Système de support (2) selon l'une quelconque des revendications précédentes, **caractérisé en ce qu'**un élément de liaison (4) relie de manière détachable deux éléments de support avant (2A) l'un à l'autre en reliant respectivement un élément de barre (3) d'un élément de support avant (2A) à une première extrémité de l'élément de liaison (4) et l'élément de barre (3) du deuxième élément de support avant (2A) à une deuxième extrémité de l'élément de liaison (4).

6. Système de support (2) selon la revendication 5, **caractérisé en ce que** les équerres de fixation (31) des éléments de barre (3) des éléments de support avant (2A) sont reliées à des équerres de fixation (41) agencées aux extrémités des éléments de liaison (4) et aux composants de nez de rotor (13).

7. Système de support (2) selon la revendication 1, **caractérisé en ce que** l'entretoise de support arrière (2B) est constituée d'une tôle oblongue, coudée à 90° sur un côté court (28), et au moins une nervure (27) côté long est agencée au centre de la tôle, et le côté court coudé (28) est relié au moyeu du rotor (RN) et l'extrémité de l'entretoise de support arrière (2B) opposée au côté coudé (28) est reliée aux composants de nez de rotor (13) .
